# FASCICULE DE BREVET EUROPEEN

(11) **EP 1 711 902 B1**
(45) Date de publication et mention de la délivrance du brevet: **14.07.2010**
(21) Numéro de dépôt: 05717450.0
(22) Date de dépôt: 20.01.2005
(51) Int. Cl.: G06F 15/16, H04L 12/44

(54) **INSTALLATION DE CAPTEURS INTELLIGENTS POUR L'ACQUISITION A HAUT DEBIT, DE DONNEES VIA LE RESEAU ETHERNET**
INSTALLATION INTELLIGENTER SENSOREN ZUR SCHNELLEN BESCHAFFUNG VON DATEN ÜBER EIN ETHERNET-NETZWERK
INSTALLATION OF INTELLIGENT SENSORS FOR THE HIGH-SPEED ACQUISITION OF DATA VIA AN ETHERNET NETWORK

(30) Priorité: 20.01.2004 FR 0400468
(43) Date de publication de la demande: 18.10.2006
(73) Titulaire: UNIVERSITE CLAUDE BERNARD - LYON 1, 69622 Villeurbanne Cédex (FR); Centre National de la Recherche Scientifique (CNRS), 75794 Paris Cedex 16 (FR)
(72) Inventeur: GIRERD, Claude, F-69160 Tassin La Demi Lune (FR); KATSANEVAS, Stavros, F-75016 Paris (FR); GUERIN, Cyrille, F-69670 Vaugneray (FR); MARTEAU, Jacques, F-38230 Tignieu (FR); BARBIER, Rémi, F-69007 Lyon (FR); SAPPEY-MARINIER, Dominique, F-69140 Rillieux (FR)
(74) Mandataire: Thibault, Jean-Marc
(86) Numéro de dépôt international: PCT/FR2005/000120
(87) Numéro de publication internationale: WO 2005/081121

(56) Documents cités:
- WO-A-00/79758
- WO-A-01/58114
- US-A1- 2003 036 875
- POTTER D ED - PIURI V ET AL INSTITUTE OF ELECTRICAL AND ELECTRONICS ENGINEERS: "USING ETHERNET FOR INDUSTRIAL I/O AND DATA ACQUISITION" IMTC/99 PROCEEDINGS OF THE 16TH IEEE INSTRUMENTATION AND MEASUREMENT TECHNOLOGY CONFERENCE. VENICE, IT, MAY 24 - 26, 1999, IEEE INSTRUMENTATION AND MEASUREMENT TECHNOLOGY CONFERENCE (IMTC), NEW YORK, NY : IEEE, US, vol. VOL. 3, 24 mai 1999 (1999-05-24), pages 1492-1496, XP000871813 ISBN: 0-7803-5277-7

## Description

La présente invention concerne le domaine technique de la transmission à haut débit de données d'acquisition par un réseau Ethernet.

L'objet de l'invention vise plus précisément la mise en oeuvre d'un et d'une manière préférée, de plusieurs capteurs à caractère intelligent, intégrés chacun comme un simple noeud sur le réseau Ethernet.

Dans de nombreuses applications, il apparaît le besoin de transmettre à distance des données de mesure réalisées par un ou plusieurs capteur(s) localisé(s) en des lieux éloignés. Ainsi, il est connu par exemple, par le document US2003-0036875, un réseau informatique de communication entre plusieurs ordinateurs. L'un au moins des ordinateurs dit maître est relié par un bus à une série de capteurs de mesure de diverses grandeurs physiques. Une telle architecture permet de transmettre à distance des données de configuration des capteurs de mesure, via un bus de communication spécifique entre l'ordinateur et les capteurs de mesure. Ce document ne décrit pas une technique d'acquisition des données à haut débit qui implique généralement un coût de réalisation élevé, une architecture de mesure relativement figée difficile à faire évoluer et une lenteur dans la transmission des données acquises.

Il est connu, par ailleurs, par la publication de POTTER D ED, PIURI V ET AL. INSTITUTE OF ELECTRICAL AND ELECTRONICS ENGINEERS : « USING ETHERNET FOR INDUSTRIAL I/O AND DATA ACQUISITION », IMTC/99 PROCEEDINGS OF THE 16TH IEEE INSTRUMENTATION AND MEASUREMENT TECHNOLOGY CONFERENCE ; VENICE, IT, MAY 24 - 26, 1999, IEEE INSTRUMENTATION AND MEASUREMENT TECHNOLOGY CONFERENCE (IMTC), NEW YORK, NY : IEEE, US, vol. VOL. 3, 24 mai 1999 (1999-05-24), pages 1492-1496, XP000871813, d'utiliser le réseau Ethernet pour l'acquisition de données, telles que des données de mesure provenant des capteurs. Toutefois, le réseau Ethernet ne permet pas de corréler le fonctionnement des différents capteurs.

L'objet de la présente invention vise donc à remédier aux inconvénients évoqués ci-dessus, en proposant une installation simple à mettre en oeuvre permettant une acquisition à haut débit de données d'acquisition, effectuée par au moins un détecteur.

Un autre objet de l'invention est de proposer une installation permettant un accès simplifié au détecteur, ainsi qu'une distribution simplifiée et corrélée des données d'acquisition.

Pour atteindre un tel objectif, l'objet de l'invention concerne une installation pour l'acquisition à haut débit, de données d'acquisition, via le réseau Ethernet à plusieurs noeuds, dont au moins l'un des noeuds du réseau Ethernet constitue une unité de détection client / serveur comportant au moins un détecteur délivrant des données d'acquisition, caractérisée en ce que chaque unité de détection comporte :
- des moyens d'auto-déclenchement pour une lecture des données d'acquisition de manière que ladite unité de détection puisse fonctionner de manière autonome,
- des moyens de lecture et de traitement indépendants des autres noeuds,
- des moyens de transmission des données d'acquisition via le réseau, à au moins un autre noeud.
- et une unité d'horloge permettant de corréler entre elles les horloges des unités de détection, chaque unité d'horloge comportant :
   - des moyens de réception d'un signal d'horloge de synchronisation, généré par une desdites unités et comportant des instructions encodées,
   - des moyens de transmission à l'unité d'horloge émettrice d'un signal de synchronisation, d'un signal d'accusé de réception,
   - et des moyens de traitement des instructions encodées pour notamment incrémenter un capteur de marquage d'évènements.

Selon une caractéristique avantageuse de réalisation, au moins l'un des noeuds du réseau Ethernet constitue une unité utilisateur client / serveur adaptée pour fournir à l'unité de détection, des données de configuration de ladite unité et pour recevoir des données d'acquisition transmises par l'unité de détection.

Avantageusement, chaque unité de détection comporte :
- un détecteur assurant la conversion d'une grandeur physique en signaux électriques délivrés sur plusieurs voies de sortie,
- un séquenceur comportant des moyens assurant :
   - le séquençage de la lecture des données d'acquisition du détecteur et des données de configuration,
   - le stockage des données d'acquisition et de configuration,
   - l'analyse et le traitement des données d'acquisition du détecteur,
   - l'interface avec un processeur réseau,
- et un processeur réseau Ethernet comportant des moyens assurant :
   - l'interface avec le séquenceur,
   - la réception des données envoyées par l'unité utilisateur pour assurer la configuration du détecteur et du séquenceur,
   - le traitement des données d'acquisition,
   - et l'envoi des données d'acquisition du détecteur, à l'unité utilisateur.

Avantageusement, le séquenceur comporte des moyens assurant :
- un formatage des données d'acquisition du détecteur et des informations découlant du traitement réalisé par l'unité de détection,
- un stockage dans une mémoire, des données d'acquisition traitées et formatées,
- et un marquage temporel du déclenchement de la prise des données. Selon un exemple préféré de réalisation, le séquenceur est réalisé par un FPGA.

Selon une caractéristique de réalisation, le processeur réseau Ethernet comporte des moyens assurant :
- la récupération des données stockées dans la mémoire par le séquenceur,
- l'analyse et le traitement desdites données,
- un formatage des données traitées,
- et une gestion partagée du traitement des données avec d'autres noeuds du réseau.

Par exemple, le séquenceur assure le stockage des données dans une mémoire interne ou externe au séquenceur.

Selon un exemple préféré de réalisation, le détecteur comporte :
- un capteur sensible possédant une série de voies de sortie,
- un sous-module de lecture des données d'acquisition, contrôlé par le séquenceur et incluant une unité électronique frontale,
- et un sous-module de contrôle piloté par le séquenceur pour configurer et contrôler l'unité électronique frontale.

Selon cet exemple de réalisation, l'unité électronique frontale comporte :
- des moyens de lecture des données d'acquisition, des moyens de sélection du mode d'acquisition et des moyens de sélection de la source de déclenchement de l'acquisition,
- des moyens d'amplification et de mise en forme des signaux,
- et des moyens de réception des paramètres de configuration.

De préférence, le sous-module de contrôle comporte des moyens pour contrôler l'unité électronique frontale et pour contrôler le détecteur.

Diverses autres caractéristiques resserrent de la description faite ci-dessous en référence aux dessins annexés qui montrent, à titre d'exemples non limitatifs, des formes de réalisation de l'objet de l'invention.

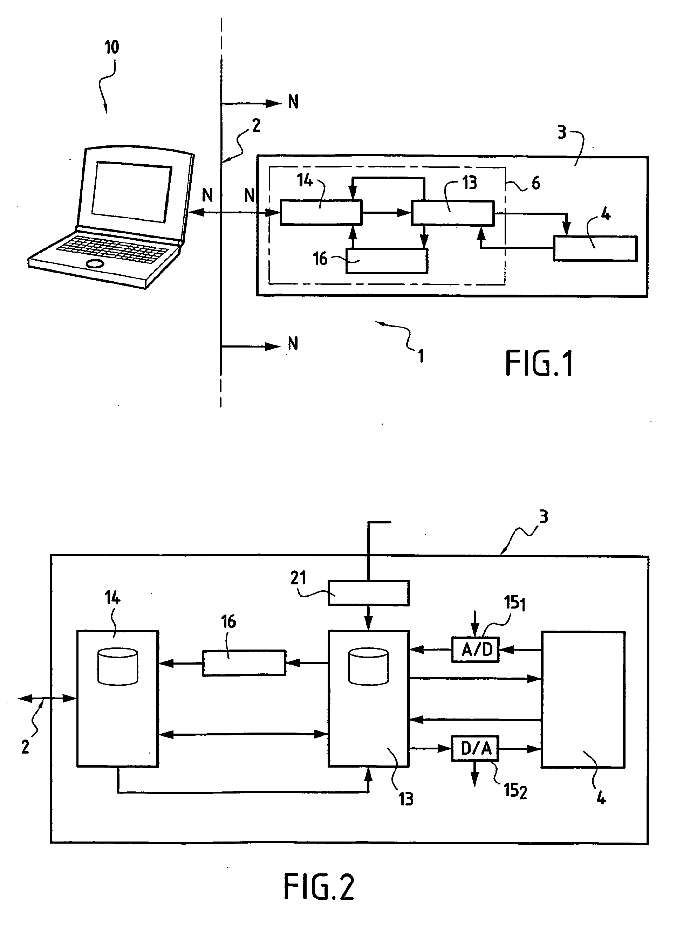

**La** **fig. 1** est une vue schématique d'un exemple de réalisation d'une installation conforme à l'invention.

La **fig. 2** est un diagramme fonctionnel d'une unité de détection conforme à l'invention.

Tel que cela ressort plus précisément de la **fig. 1****,** l'objet de l'invention concerne une installation **1** mettant en oeuvre le réseau Ethernet **2** à plusieurs noeuds **N.** Selon une caractéristique de l'invention, l'un au moins des noeuds **N** du réseau Ethernet constitue une unité de détection **3** client / serveur comportant au moins un détecteur **4** délivrant des données d'acquisition.

Un détecteur **4** est adapté pour mesurer une grandeur physique au sens général. Dans un exemple préféré de réalisation, le détecteur **4** est apte à capter des particules et à créer une quantité de charge correspondant à l'interaction particule - cellule sensible. Le détecteur **4** assure ainsi la conversion d'une grandeur physique en des signaux électriques. Selon un exemple préféré de réalisation, le détecteur **4** délivre des signaux électriques sur plusieurs voies de sortie, comme cela sera expliqué dans la suite de la description.

Chaque unité de détection **3** comporte également un contrôleur d'acquisition **6** formant la partie électronique d'acquisition intelligente. Ce contrôleur d'acquisition **6** reçoit les signaux électriques du détecteur **4** et possède sa propre adresse IP (Internet Protocole) de manière que le détecteur **4** se trouve relié directement au réseau Ethernet via le contrôleur d'acquisition intelligent **6.**

Selon une caractéristique de l'invention, l'unité de détection **3** comporte des moyens d'auto-déclenchement pour la lecture des données d'acquisition délivrées par le détecteur **4,** de manière que l'unité de détection **3** puisse fonctionner de manière autonome. Selon une autre caractéristique de l'invention, le contrôleur d'acquisition **6** comporte des moyens de lecture et de traitement des données, indépendants des autres noeuds **N** du réseau Ethernet. En d'autres termes, le contrôleur d'acquisition **6** est apte à assurer un traitement de manière autonome.

Par ailleurs, le contrôleur d'acquisition **6** comporte des moyens de transmission des données d'acquisition via le réseau Ethernet **2** à au moins un autre noeud **N.** Il est à noter que le contrôleur d'acquisition **6** remplit toutes les fonctionnalités nécessaires à une acquisition multi-voies à haut débit (pré-traitement et formatage des données, marquage en temps, envoi sur le réseau), au contrôle du fonctionnement du détecteur **4** et au traitement des données.

Ce contrôleur d'acquisition **6** permet également la synchronisation d'un détecteur **4** avec soit d'autres détecteurs, soit avec une horloge externe pour la construction d'un système complet d'acquisition distribué et synchronisé comme cela sera décrit plus en détail dans la suite de la description.

Le contrôleur d'acquisition **6** est contrôlé via le réseau Ethemet, par une unité utilisateur **10** client / serveur constituant un noeud **N** du réseau Ethernet **2.** Cette unité utilisateur **10** est adaptée pour fournir à l'unité de détection **3,** des données de configuration de ladite unité et pour recevoir les données d'acquisition transmises par l'unité de détection **3.**

Tel que cela ressort plus précisément de la **fig. 2****,** ce contrôleur d'acquisition **6** comporte un séquenceur **13** communiquant avec le détecteur **4** et un processeur réseau Ethernet **14** relié au réseau Ethernet **2** et au séquenceur **13.** Le séquenceur **13** est relié au détecteur **4** par au moins un convertisseur analogique/numérique **15₁** et par au moins un convertisseur numérique/analogique **15₂.**

Conformément à l'invention, le séquenceur **13** comporte des moyens assurant le séquençage de la lecture des données d'acquisition du détecteur **4** et des données de configuration transmises par l'unité utilisateur **10.** Le séquenceur **13** comporte des moyens assurant un formatage des données d'acquisition du détecteur **4** et des informations découlant du traitement réalisé par l'unité de détection **3.** Le séquenceur **13** comporte également des moyens assurant le stockage des données d'acquisition traitées et formatées, ainsi que des données de configuration. Le stockage de ces données est effectué dans une mémoire **16** interne, ou comme illustré externe au séquenceur **13** et relié au processeur réseau Ethernet **14.**

Le séquenceur **13** comporte également des moyens assurant l'interface avec le processeur réseau Ethernet **14.** Le processeur réseau Ethernet **14** comporte des moyens assurant l'interface avec le séquenceur **13** et des moyens assurant la récupération des données stockées dans la mémoire **16** par le séquenceur **13.**

Avantageusement, le processeur réseau Ethernet **14** comporte des moyens assurant l'analyse et le traitement des données récupérées et un formatage desdites données. Le processeur réseau Ethernet **14** comporte également des moyens permettant l'envoi des données d'acquisition du détecteur **4** à l'unité utilisateur **10.** Le processeur réseau Ethernet **14** comporte aussi des moyens de réception des données envoyées par l'unité utilisateur **10,** en vue d'assurer la configuration du détecteur **4** et du séquenceur **13.**

La description qui suit illustre un exemple de réalisation d'une unité de détection 3 client / serveur. Selon cet exemple de réalisation, le détecteur **4** est un capteur multi-voies sensible aux photons. Un tel détecteur **4** peut être un détecteur de photons multi-pixels, un photo multiplicateur multi-anode (maPMT), des photodiodes hybrides (HPD) ou des photodiodes à avalanches (APD).

Le détecteur **4** comporte également :
- un sous-module de lecture des données d'acquisition, contrôlé par le séquenceur 13 et incluant une unité électronique frontale,
- et un sous-module de contrôle piloté par le séquenceur **13** pour configurer et contrôler l'unité électronique frontale.

L'unité électronique frontale comporte :
- des moyens d'amplification et de mise en forme des signaux délivrés par le détecteur **4** (une voie lente pour des mesures de précision et une voie rapide pour le déclenchement),
- et des moyens de réception des paramètres de configuration du détecteur **4,** (tels que les signaux de polarisation ou les registres de configuration et de lecture).

L'unité électronique frontale comporte également :
- des moyens de lecture des données d'acquisition multiplexées de la voie lente et des moyens de conversion analogique - digitale,
- des moyens de sélection du mode d'acquisition, à savoir calibration, test, acquisition mono-canal ou acquisition multi-canal,
- et des moyens de sélection de la source de déclenchement de l'acquisition (déclenchement externe ou auto-déclenchement).

Le sous-module de contrôle, piloté par le séquenceur **13,** permet de contrôler :
- l'unité électronique frontale en assurant par exemple l'ajustement des tensions et des courants de polarisation, le contrôle des seuils de déclenchement par voie, et le contrôle des signaux de calibration,
- et le détecteur **4,** comme le contrôle des tensions de polarisation et d'alimentation.

Le séquenceur **13** comporte des moyens assurant :
- le séquençage de la lecture, permettant la réception et la génération des signaux d'horloge, la génération des registres de configuration de lecture, la gestion des entrées / sorties digitales et la gestion des convertisseurs **15₁, 15₂,**
- le traitement des données, tel que la suppression des zéros, la validation d'événements par des déclencheurs externes,
- le formatage des données,
- et l'analyse des données, par exemple, par le calcul rapide de grandeurs associé aux données et pré-selection des événements.

Selon une variante préférée de réalisation, le séquenceur est réalisé par un FPGA.

Conformément à l'invention, l'installation **1** permet une acquisition multiple distribuée via le réseau Ethernet **2.** A cet égard, chaque unité de détection **3** comporte une unité d'horloge **21** permettant de corréler entre elles les horloges des unités de détection **3** et de permettre un marquage en temps. L'une des unités de détection **3** ou l'unité utilisateur 10, dite maître, génère un signal d'horloge de synchronisation comportant des instructions encodées. Chaque unité d'horloge comporte des moyens de réception du signal d'horloge de synchronisation et des moyens de transmission à l'unité d'horloge émettrice du signal de synchronisation, d'un signal d'accusé de réception. Chaque unité d'horloge comporte également des moyens de traitement des instructions encodées pour notamment incrémenter un capteur de marquage d'événements associés. Une telle incrémentation permet de synchroniser toutes les horloges des différents noeuds de l'acquisition distribuée.

Il ressort de la description qui précède que l'objet de l'invention permet une acquisition de données de mesure reposant exclusivement sur le réseau Ethernet dans la mesure où aucun bus intermédiaire n'est mis en oeuvre. Chacun des noeuds du réseau Ethernet constitué par une unité de détection **10** est contrôlé et lu par une puce Ethernet embarquée par chaque unité de détection visible de manière transparente par le réseau.

Par ailleurs, chaque unité utilisateur client / serveur **10** contrôle par un lien Ethernet direct les unités de détection **3** en assurant par exemple, la configuration de l'unité électronique frontale, le contrôle du séquençage et de la numérisation ainsi que le traitement et la transmission des données sur le réseau Ethernet.

Enfin, chaque unité de détection **3** comporte un contrôleur d'acquisition intelligent **6** possédant sa propre adresse IP tout en étant autonome pour assurer un contrôle lent, le traitement et la lecture des données d'acquisition.

L'architecture proposée par l'invention présente un coût faible, une standardisation liée à celle d'Ethernet, une modularité dans la conception du schéma d'acquisition des données et une flexibilité dans le traitement des données.

L'invention n'est pas limitée aux exemples décrits et représentés car diverses modifications peuvent y être apportées sans sortir de son cadre.

## Revendications

1. Installation pour l'acquisition, de données d'acquisition, via le réseau Ethernet **(2)** à plusieurs noeuds **(N),** dont au moins l'un des noeuds du réseau Ethernet constitue une unité de détection client / serveur **(3)** comportant au moins un détecteur **(4)** délivrant des données d'acquisition,
**caractérisée en ce que** chaque unité de détection **(3)** comporte :
- des moyens, d'auto-déclenchement pour une lecture des données d'acquisition délivrées par le détecteur (4),
- des moyens de lecture et de traitement indépendants des autres noeuds, de manière que ladite unité de détection (3) fonctionne de manière autonome,
- des moyens de transmission des données d'acquisition via le réseau **(2),** à au moins un autre noeud **(N).**
- et une unité d'horloge permettant de corréler entre elles les horloges des unités de détection, chaque unité d'horloge comportant :
• des moyens de réception d'un signal d'horloge de synchronisation, généré par une desdites unités et comportant des instructions encodées,
• des moyens de transmission à l'unité d'horloge émettrice d'un signal de synchronisation, d'un signal d'accusé de réception,
• et des moyens de traitement des instructions encodées pour notamment incrémenter un capteur de marquage d'évènements.

2. Installation selon la revendication 1, **caractérisée en ce qu'**au moins l'un des noeuds **(N)** du réseau Ethernet **(2)** constitue une unité utilisateur client / serveur **(10)** adaptée pour fournir à l'unité de détection **(3),** des données de configuration de ladite unité et pour recevoir des données d'acquisition transmises par l'unité de détection **(3).**

3. Installation selon les revendications 1 et 2, **caractérisée en ce que** chaque unité de détection **(3)** comporte :
- un détecteur **(4)** assurant la conversion d'une grandeur physique en signaux électriques délivrés sur plusieurs voies de sortie,
- un séquenceur **(13)** comportant des moyens assurant :
• le séquençage de la lecture des données d'acquisition du détecteur et des données de configuration,
• le stockage des données d'acquisition et de configuration,
• l'analyse et le traitement des données d'acquisition du détecteur,
• l'interface avec un processeur réseau **(2),**
- et un processeur réseau Ethernet **(14)** comportant des moyens assurant :
• l'interface avec le séquenceur,
• la réception des données envoyées par l'unité utilisateur **(10)** pour assurer la configuration du détecteur **(4)** et du séquenceur **(13),**
• le traitement des données d'acquisition,
• et l'envoi des données d'acquisition du détecteur **(4),** à l'unité utilisateur **(10).**

4. Installation selon la revendication 3, **caractérisée en ce que** le séquenceur **(13)** comporte des moyens assurant :
- un formatage des données d'acquisition du détecteur **(4)** et des informations découlant du traitement réalisé par l'unité de détection **(3),**
- un stockage dans une mémoire **(16),** des données d'acquisition traitées et formatées,
- et un marquage temporel du déclenchement de la prise des données.

5. Installation selon la revendication 4, **caractérisée en ce que** le séquenceur **(13)** est réalisé par un FPGA.

6. Installation selon les revendications 1 et 3, **caractérisée en ce que** le processeur réseau Ethernet **(14)** comporte des moyens assurant :
- la récupération des données stockées dans la mémoire **(16)** par le **séquenceur (13),**
- l'analyse et le traitement desdites données,
- un formatage des données traitées,
- et une gestion partagée du traitement des données avec d'autres noeuds du réseau **(2).**

7. Installation selon la revendication 4, **caractérisée en ce que** le séquenceur **(13)** assure le stockage des données dans une mémoire **(16)** interne ou externe du séquenceur.

8. Installation selon la revendication 1, **caractérisée en ce que** le détecteur **(4)** comporte :
- un capteur possédant une série de voies de sortie,
- un sous-module de lecture des données d'acquisition, contrôlé par le séquenceur et incluant une unité électronique frontale,
- et un sous-module de contrôle piloté par le séquenceur pour configurer et contrôler l'unité électronique frontale.

9. Installation selon la revendication 8, **caractérisée en ce que** l'unité électronique frontale du sous-module de lecteur comporte :
- des moyens de lecture des données d'acquisition, des moyens de sélection du mode d'acquisition et des moyens de sélection de la source de déclenchement de l'acquisition,
- des moyens d'amplification et de mise en forme des signaux,
- et des moyens de réception des paramètres de configuration.

10. Installation selon la revendication 8, **caractérisée en ce que** le sous-module de contrôle comporte des moyens pour contrôler l'unité électronique frontale et pour contrôler le détecteur.

## Claims

1. An installation for the acquisition of acquisition data via an Ethernet network **(2)** with several nodes **(N),** where at least one of the nodes of the Ethernet network constitutes a client/server detection unit **(3)** with at least one detector **(4)** delivering acquisition data, **characterised in that** each detection unit **(3)** includes:
- self-triggering resources for reading the acquisition data delivered by the detector **(4);**
- reading and processing resources independent of the other nodes, so that said detection unit **(3)** operates independently;
- resources for transmission of the acquisition data via the network **(2)** to at least one other node **(N);** and
- a clock unit allowing correlation between the clocks of the detection units, where each clock unit has:
• resources for receiving a clock synchronisation signal, generated by one of said units and including encoded instructions;
• resources for transmission of an acknowledge signal to the clock unit transmitting a synchronisation signal; and
• resources for processing the encoded instructions, in particular to increment an event-marking sensor.

2. An installation according to claim 1, **characterised in that** at least one of the nodes **(N)** of the Ethernet network **(2)** constitutes a client/server user unit **(10)** designed to provide the detection unit **(3)** with configuration data from said unit, and to receive acquisition data transmitted by the detection unit **(3).**

3. An installation according to claims 1 and 2, **characterised in that** each detection unit **(3)** includes:
- a detector **(4)** performing the conversion of a physical magnitude into electrical signals delivered on several output paths; and
- a sequencer **(13)** with resources performing:
• sequencing for reading the acquisition data from the detector and the configuration data;
• storage of the acquisition and configuration data;
• analysis and processing of the acquisition data from the detector;
• the interface to a network processor **(2);** and
- an Ethernet network processor **(14)** with resources providing:
• the interface to the sequencer;
• reception of the data sent by the user unit **(10)** to perform the configuration of the detector **(4)** and of the sequencer **(13);**
• processing of the acquisition data; and
• transmission of the acquisition data from the detector **(4)** to the user unit **(10).**

4. An installation according to claim 3, **characterised in that** the sequencer **(13)** includes resources performing:
- formatting of the acquisition data from the detector **(4)** and of the information resulting from the processing effected by the detection unit **(3);**
- storage in a memory **(16)** of the processed and formatted acquisition data; and
- temporal marking of the trigger for acquisition of the data.

5. An installation according to claim 4, **characterised in that** the sequencer **(13)** is built around an FPGA device.

6. An installation according to claims 1 and 3, **characterised in that** the Ethernet network processor **(14)** includes resources performing:
- retrieval of the data stored in the memory **(16)** by the sequencer **(13);**
- analysis and processing of said data;
- formatting of the processed data; and
- shared management of the data processing with other nodes of the network **(2).**

7. An installation according to claim 4, **characterised in that** the sequencer **(13)** performs the storage of the data in memory **(16)** inside or outside the sequencer.

8. An installation according to claim 1, **characterised in that** the detector **(4)** includes:
- a sensor with a series of output paths;
- a sub-module for reading the acquisition data, controlled by the sequencer and including a frontal electronic unit; and
- a control sub-module managed by the sequencer to configure and control the frontal electronic unit.

9. An Installation according to claim 8, **characterised in that** the frontal electronic unit of the read sub-module includes:
- resources for reading the acquisition data, resources for selection of the acquisition mode, and resources for selection of the acquisition trigger source;
- resources for amplification and shaping of the signals; and
- resources for receiving the configuration parameters.

10. An installation according to claim 8, **characterised in that** the control sub-module includes resources to control the frontal electronic unit and to control the detector.

## Patentansprüche

1. Einrichtung für die Gewinnung von Erfassungsdaten über das Ethernet-Netzwerk (2) mit mehreren Knoten (N), wobei wenigstens einer der Knoten des Ethernet-Netzwerks eine Client-Server-Erfassungseinheit (3) bildet, die wenigstens einen Erfassungsdaten liefernden Detektor (4) umfaßt,
**dadurch gekennzeichnet, daß** jede Erfassungseinheit (3) umfaßt:
- Selbstauslösemittel für ein Lesen der durch den Detektor (4) gelieferten Erfassungsdaten,
- Lese- und Verarbeitungsmittel, die von den anderen Knoten unabhängig sind, so daß die Erfassungseinheit (3) selbständig arbeitet,
- Mittel zum Übertragen der Erfassungsdaten über das Netzwerk (2) zu wenigstens einem anderen Knoten (N), und
- eine Takteinheit, die ermöglicht, die Takte der Erfassungseinheiten untereinander zu korrelieren, wobei jede Takteinheit umfaßt:
- Mittel zum Empfangen eines Synchronisiertaktsignals, das durch eine der Einheiten erzeugt wird und codierte Befehle umfaßt,
- Mittel zum Übertragen eines Quittungssignals an die ein Synchronisiersignal sendende Takteinheit und
- Mittel zum Verarbeiten der codierten Befehle, um insbesondere einen Sensor zur Kennzeichnung von Ereignissen zu inkrementieren.

2. Einrichtung nach Anspruch 1, **dadurch gekennzeichnet, daß** wenigstens einer der Knoten (N) des Ethernet-Netzwerks (2) eine Benutzer-Client-Server-Einheit (10) bildet, die geeignet ist, der Erfassungseinheit (3) Daten zur Konfiguration der Einheit zu liefern und durch die Erfassungseinheit (3) übertragene Erfassungsdaten zu empfangen.

3. Einrichtung nach den Ansprüchen 1 und 2, **dadurch gekennzeichnet, daß** jede Erfassungseinheit (3) umfaßt:
- einen Detektor (4), der die Umwandlung einer physikalischen Größe in elektrische Signale sicherstellt, die an mehrere Ausgangswege geliefert werden,
- eine Folgesteuerung (13) mit Mitteln zum Sicherstellen:
- der Ablaufsteuerung des Lesen der Erfassungsdaten des Detektors und der Konfigurationsdaten,
- der Speicherung der Erfassungs- und Konfigurationsdaten,
- der Analyse und der Verarbeitung der Erfassungsdaten des Detektors,
- der Schnittstelle mit einem Netzwerkprozessor (14),
- und einen Ethernet-Netzwerkprozessor (14) mit Mitteln zum Sicherstellen:
- der Schnittstelle mit der Folgesteuerung,
- des Empfangs der durch die Benutzer-Einheit (10) gesandten Daten, um die Konfiguration des Detektors (4) und der Folgesteuerung (13) sicherzustellen,
- der Verarbeitung der Erfassungsdaten und
- des Sendens der Erfassungsdaten des Detektors (4) an die Benutzer-Einheit (10).

4. Einrichtung nach Anspruch 3, **dadurch gekennzeichnet, daß** die Folgesteuerung (13) Mittel umfaßt zum Sicherstellen:
- einer Formatierung der Erfassungsdaten des Detektors (4) und der aus der Verarbeitung durch die Erfassungseinheit (3) hervorgehenden Informationen,
- einer Speicherung der verarbeiteten und formatierten Erfassungsdaten in einem Speicher (16) und
- einer zeitlichen Kennzeichnung des Auslösens der Entnahme der Daten.

5. Einrichtung nach Anspruch 4, **dadurch gekennzeichnet, daß** die Folgesteuerung (13) durch ein FPGA realisiert ist.

6. Einrichtung nach den Ansprüchen 1 und 3, **dadurch gekennzeichnet, daß** der Ethernet-Netzwerkprozessor (14) Mittel umfaßt zum Sicherstellen:
- der Gewinnung der durch die Folgesteuerung (13) in dem Speicher (16) gespeicherten Daten,
- der Analyse und der Verarbeitung der Daten,
- einer Formatierung der verarbeiteten Daten und
- einer geteilten Verwaltung der Verarbeitung der Daten mit anderen Knoten des Netzwerks (2).

7. Einrichtung nach Anspruch 4, **dadurch gekennzeichnet, daß** die Folgesteuerung (13) die Speicherung der Daten in einem internen oder externen Speicher (16) der Folgesteuerung sicherstellt.

8. Einrichtung nach Anspruch 1, **dadurch gekennzeichnet, daß** der Detektor (4) umfaßt:
- einen Sensor, der eine Reihe von Ausgangswegen besitzt,
- ein Submodul zum Lesen der Erfassungsdaten, das durch die Folgesteuerung kontrolliert wird und eine stirnseitige elektronische Einheit einschließt, und
- ein durch die Folgesteuerung gesteuertes Kontroll-Submodul, um die stirnseitige elektronische Einheit zu konfigurieren und zu kontrollieren.

9. Einrichtung nach Anspruch 8, **dadurch gekennzeichnet, daß** die stirnseitige elektronische Einheit des Lese-Submoduls umfaßt:
- Mittel zum Lesen der Erfassungsdaten, Mittel zur Auswahl der Erfassungsart und Mittel zur Auswahl der Quelle zum Auslösen der Erfassung,
- Mittel zum Verstärken und Formen der Signale und
- Mittel zum Empfangen der Konfigurationsparameter.

10. Einrichtung nach Anspruch 8, **dadurch gekennzeichnet, daß** das Kontroll-Submodul Mittel zum Kontrollieren der stirnseitigen elektronischen Einheit und zum Kontrollieren des Detektors umfaßt.
